# EUROPÄISCHE PATENTSCHRIFT

(11) **EP 0 873 489 B1**
(45) Veröffentlichungstag und Bekanntmachung des Hinweises auf die Patenterteilung: **23.02.2000**
(21) Anmeldenummer: 96946206.8
(22) Anmeldetag: 17.12.1996
(51) Int. Cl.: F22B 29/06, F22B 37/14

(54) **DURCHLAUFDAMPFERZEUGER MIT SPIRALFÖRMIG ANGEORDNETEN VERDAMPFERROHREN**
CONTINUOUS-FLOW STEAM GENERATOR WITH SPIRAL EVAPORATION TUBES
EVAPORATEUR EN CONTINU A TUBES EVAPORATEURS EN SPIRALE

(30) Priorität: 02.01.1996 DE 19600004
(43) Veröffentlichungstag der Anmeldung: 28.10.1998
(73) Patentinhaber: SIEMENS AKTIENGESELLSCHAFT, 80333 München (DE)
(72) Erfinder: WITTCHOW, Eberhard, D-91054 Erlangen (DE); KRAL, Rudolf, D-91301 Forchheim (DE)
(86) Internationale Anmeldenummer: DE9602435
(87) Internationale Veröffentlichungsnummer: WO9724555

(56) Entgegenhaltungen:
- EP-A- 0 349 834
- DE-A- 4 236 835
- GB-A- 2 007 340
- VGB KRAFTWERKSTECHNIK, Bd. 73, Nr. 4, 1993, ESSEN DE, Seiten 352-361, XP002032730 J. FRANKE, W KÖHLER, E. WITTCHOW: "Verdampferkonzepte für Benson-Dampferzeuger"

## Beschreibung

Die Erfindung betrifft einen Durchlaufdampferzeuger mit einem aus miteinander über Flossen gasdicht verschweißten Dampferzeugerrohren gebildeten Gaszug, wobei die Dampferzeugerrohre für den Durchfluß eines Strömungsmediums parallel geschaltet sind, auf ihrer Innenseite eine Oberflächenstruktur zum Erzeugen eines hohen Wärmeübergangs von ihrer Innenwand auf das Strömungsmedium aufweisen und in einem Befeuerungsbereich des Gaszuges annähernd in einer Spiralwicklung angeordnet sind. Ein derartiger Durchlaufdampferzeuger ist in der GB 2 007 340 A beschrieben.

In den Brennkammerwänden eines Durchlaufdampferzeugers, die in einem Befeuerungsbereich aus spiralförmig angeordneten Dampferzeugerrohren aufgebaut sind, werden üblicherweise Glattrohre eingesetzt. Aufgrund der Wärmeübergangseigenschaften eines Glattrohres bei einer niedrigen Strömungsgeschwindigkeit eines in ihm strömenden Mediums ist eine derartige Anordnung jedoch nur für Lastzustände von üblicherweise mehr als etwa 40 % der Auslegungslast des Durchlaufdampferzeugers geeignet. Unterhalb dieser Mindestlast von etwa 40 % der Auslegungslast wird dem Durchlaufbetrieb des Dampferzeugers üblicherweise ein Umwälzbetrieb überlagert, so daß eine ausreichende Kühlung der Dampferzeugerrohre gewährleistet ist. Eine derartige Zuschaltung eines Umwälzbetriebes führt jedoch zu einer Absenkung der Frischdampftemperatur des Durchlaufdampferzeugers um etwa 80° C.

Insbesondere zur Vermeidung von Nachtstillständen einer von dem Durchlaufdampferzeuger bespeisten Kraftwerksanlage kann es jedoch erforderlich sein, den Durchlaufdampferzeuger derart auszulegen, daß er bereits bei Lastzuständen von mehr als 20 % der Auslegungslast mit einer ausreichend hohen Frischdampftemperatur betreibbar ist. Dies ist durch den Einsatz von solchen Dampferzeugerrohren möglich, die auf ihrer Innenseite eine Oberflächenstruktur, beispielsweise in Form von Rippen (innenberippte Rohre), zum Erzeugen eines hohen Wärmeübergangs von ihrer Innenwand auf das Strömungsmedium aufweisen. Der Einsatz derartiger Dampferzeugerrohre mit Innenberippung in einem Durchlaufdampferzeuger mit vertikal angeordneten Verdampferrohren ist beispielsweise aus der Europäischen Patentanmeldung 0 503 116 A1 bekannt.
Allerdings weist ein Dampferzeugerrohr mit Innenberippung im Vergleich zu einem Glattrohr einen deutlich höheren Reibungsdruckverlust auf. Ein derartig erhöhter Reibungsdruckverlust kann bei Mehrbeheizung eines Dampferzeugerrohres aufgrund von Massenstromschwankungen des das Rohr durchströmenden Mediums zu Temperaturdifferenzen zwischen benachbarten Rohren - insbesondere am Austritt eines Verdampfers - führen. Diese Temperaturdifferenzen können Schäden aufgrund von unzulässigen Wärmespannungen verursachen.

Der Erfindung liegt daher die Aufgabe zugrunde, einen Durchlaufdampferzeuger der obengenannten Art anzugeben, bei dessen Betrieb auch bei niedrigen Lastzuständen von beispielsweise etwa 20 % der Auslegungslast des Durchlaufdampferzeugers besonders geringe Temperaturdifferenzen am Austritt benachbarter Dampferzeugerrohre auftreten.

Diese Aufgabe wird erfindungsgemäß durch einen Durchlaufdampferzeuger der obengenannten Art gelöst, bei dem jedes Dampferzeugerrohr derart ausgelegt ist, daß durch Wertepaare der Rohrlänge im Befeuerungsbereich und des Rohraußendurchmessers bestimmte Punkte in einem Koordinatensystem annähernd auf einer Geraden liegen, die
- für eine Flossenbreite von 12 mm durch die durch die Wertepaare L = 59,7 m, d = 31,8 mm und L = 93,6 m, d = 44,5 mm bestimmten Punkte,
- für eine Flossenbreite von 16 mm durch die durch die Wertepaare L = 64,7 m, d = 31,8 mm und L = 99,8 m, d = 44,5 mm bestimmten Punkte, oder
- für eine Flossenbreite von 20 mm durch die durch die Wertepaare L = 70,6 m, d = 31,8 mm und L = 106,9 m, d = 44,5 mm bestimmten Punkte
definiert ist.

Die Rohrlänge ist dabei die Länge des Dampferzeugerrohres zwischen einem Anfangs- und einem Endwert, wobei der Anfangswert definiert ist durch den Übergang eines unterhalb des Gaszuges angebrachten Aschetrichters in den Gaszug, zu dem ein Drittel der Höhe des Aschetrichters hinzuaddiert ist. Der Endwert ist dadurch definiert, daß die spiralförmig angeordneten Dampferzeugerrohre entweder in eine senkrechte Anordnung übergehen oder, beispielsweise durch einen Sammelbehälter, druckmäßig miteinander verbunden sind.

Um auch einen Durchlaufdampferzeuger, dessen Dampferzeugerrohre eine besonders große oder eine besonders geringe Wandstärke aufweisen, oder dessen Aschetrichter einen besonders großen oder einen besonders geringen Neigungswinkel seiner Außenwände aufweist, sicher bei niedrigen Lastzuständen von etwa 20 % seiner Auslegungslast betreiben zu können, weicht die Rohrlänge jedes Dampferzeugerrohres zweckmäßigerweise um nicht mehr als 15 % von der durch die jeweilige Gerade definierten Rohrlänge ab. Für eine andere als die genannten Flossenbreiten ist die Rohrlänge zweckmäßigerweise linear mit der Flossenbreite aus den gegebenenen Geraden extra- oder interpoliert.

Die Erfindung geht von der Überlegung aus, daß eine Temperaturdifferenz zwischen dem Auslaß eines mehrbeheizten Dampferzeugerrohres und dem Auslaß eines normal oder durchschnittlich beheizten Dampferzeugerrohres dann besonders gering ist, wenn die Mehrbeheizung des Dampferzeugerrohres die in diesem strömende Massenstromdichte nur wenig herabsetzt. Die Massenstromdichte eines mehrbeheizten Dampferzeugerrohres sinkt ab, weil sich aufgrund der Mehrbeheizung der Reibungsdruckverlust des betroffenen Dampferzeugerrohres erhöht. Da der Gesamtdruckverlust in einem Dampferzeugerrohr sich jedoch zusammensetzt aus dem Druckverlustanteil "Reibungsdruckverlust" und dem Druckverlustanteil "geodätischer Druckverlust", ist die Auswirkung einer Mehrbeheizung eines Dampferzeugerrohres auf dessen Massenstromdichte verringerbar, indem der Druckverlustanteil "geodätischer Druckverlust" des Gesamtdruckverlustes ausreichend hoch ist. Ein ausreichend hoher Druckverlustanteil "geodätischer Druckverlust" von beispielsweise mehr als dem 0,5-fachen des Reibungsdruckverlustes ist durch eine entsprechende Auslegung der Dampferzeugerrohre erreichbar.

Der Reibungsdruckverlust eines Dampferzeugerrohres ist beispielsweise ermittelbar nach den Druckschriften Q. Zheng et al., "Druckverlust in glatten und innenberippten Verdampferrohren", Wärme- und Stoffübertragung 26, Seite 232 bis 330, Springer Verlag 1991 und Z. Rouhani, "Modified Correlations for Void-Fraction and Two-Phase Pressure Drop", AE-RTV-841 (1969).

Um bei kleinen Temperaturdifferenzen zwischen mehrbeheizten und normal beheizten Dampferzeugerrohren die Durchströmungen aller Dampferzeugerrohre weiter zu verbessern, ist zweckmäßigerweise der Innendurchmesser der Dampferzeugerrohre in einem oberen Bereich des Befeuerungsbereiches der Brennkammer größer als in einem unteren Bereich.

Ausführungsbeispiele der Erfindung werden anhand einer Zeichnung näher erläutert. Darin zeigen:
- Figur 1: in vereinfachter Darstellung einen Durchlaufdampferzeuger mit annähernd spiralförmig berohrter Brennkammerwand,
- Figur 2: einen Ausschnitt aus einem Schrägschnitt durch eine Brennkammerwand, und
- Figur 3: ein Koordinatensystem mit Kurven A, B und C.

Gleiche Teile sind in allen Figuren mit den gleichen Bezugszeichen versehen.

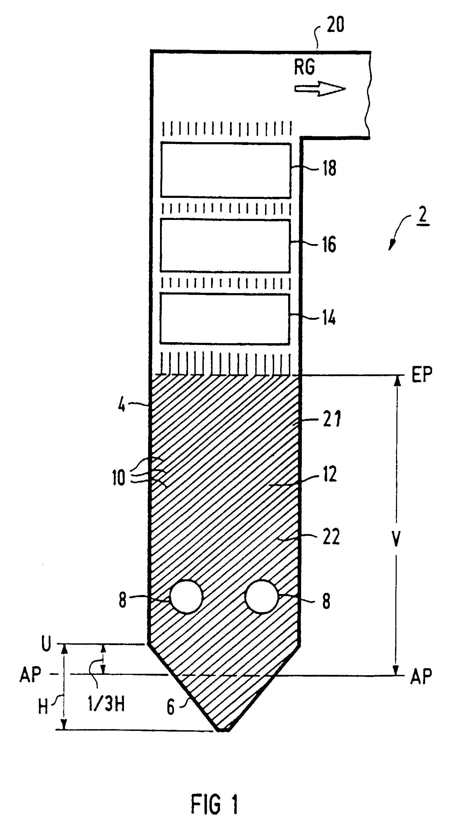

In Figur 1 ist schematisch ein Durchlaufdampferzeuger 2 mit rechteckigem Querschnitt dargestellt, dessen vertikaler Gaszug durch eine Umfassungs- oder Brennkammerwand 4 gebildet ist, die am unteren Ende in einen trichterförmigen Boden 6 übergeht.

In einem Befeuerungsbereich V des Gaszugs sind eine Anzahl von Brennern für einen fossilen Brennstoff in jeweils einer Öffnung 8, von denen nur zwei sichtbar sind, in der aus Dampferzeugerrohren 10 zusammengesetzten Brennkammerwand 4 angebracht. Die Dampferzeugerrohre 10 sind in dem Befeuerungsbereich V, in dem sie zu einer Verdampferheizfläche 12 gasdicht miteinander verschweißt sind, annähernd in einer Spiralwicklung angeordnet.

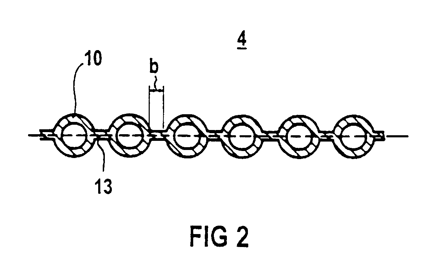

Wie in Figur 2 dargestellt, sind die Dampferzeugerrohre 10 über Flossen 13 mit der Flossenbreite b gasdicht miteinander verschweißt und bilden beispielsweise in einer Rohr-Steg-Rohr-Konstruktion oder in einer Flossenrohrkonstruktion die gasdichte Brennkammerwand 4. Die Dampferzeugerrohre weisen auf ihrer Innenseite eine Oberflächenstruktur zum Erzeugen eines hohen Wärmeübergangs von ihrer Innenwand auf das Strömungsmedium aufweisen. Derartige Oberflächenstrukturen sind beispielsweise in der Deutschen Offenlegungsschrift 2032891 beschrieben.

Oberhalb des Befeuerungsbereiches V des Gaszugs befinden sich Konvektionsheizflächen 14, 16 und 18. Darüber befindet sich ein Rauchgasaustrittskanal 20, über den das durch Verbrennung eines fossilen Brennstoffs erzeugte Rauchgas RG den vertikalen Gaszug verläßt. Das Rauchgas RG dient als Heizmedium für das in den Dampferzeugerohren 10 strömende Wasser oder Wasser-Dampf-Gemisch.

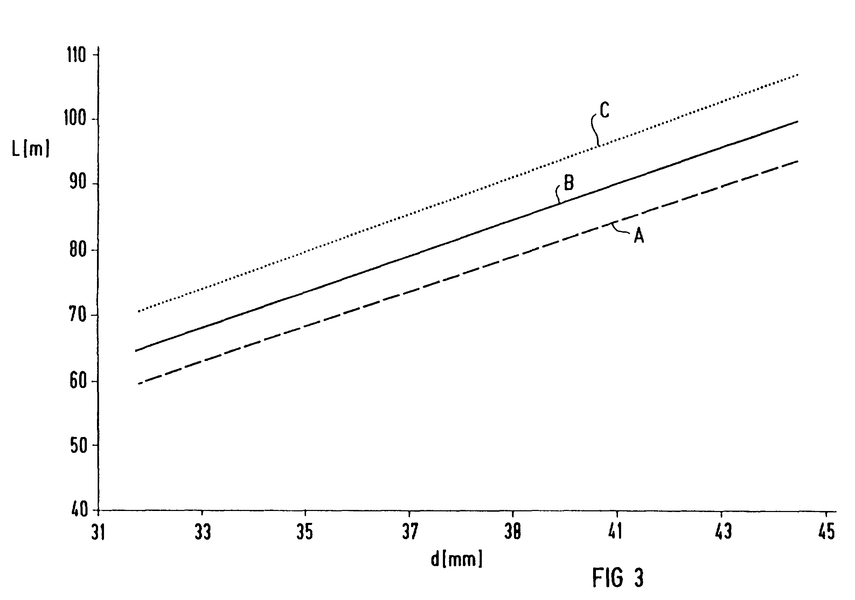

Die Dampferzeugerrohre 10 sind derart ausgelegt, daß beim Betrieb des Durchlaufdampferzeugers 2 der geodätische Druckverlust des ein Dampferzeugerrohr 10 durchströmenden Mediums mindestens das 0,5-fache von dessen Reibungsdruckverlust beträgt. Um dazu unabhängig von der Dampfleistung des Durchlaufdampferzeugers 2 einen ausreichend hohen geodätischen Druckverlust im Dampferzeugerrohr 10 zu gewährleisten, sind die Dampferzeugerrohre 10 derart ausgelegt, daß durch Wertepaare der Rohrlänge L im Befeuerungsbereich V und des Rohraußendurchmessers d bestimmte Punkte in einem Koordinatensystem annähernd auf einer der in Figur 3 dargestellten Kurven oder Geraden A, B, oder C liegen. Die Kurve A gibt dabei das Auslegungskriterium für einen Durchlaufdampferzeuger 2 mit Dampferzeugerrohren 10 an, die über Flossen 13 mit einer Flossenbreite b von 12 mm gasdicht miteinander verschweißt sind. Die Kurven B und C hingegen geben das Auslegungskriterium dafür an, daß die Flossenbreite b 16 bzw. 20 mm beträgt.

Die Rohrlänge L im Befeuerungsbereich V ist dabei die mittlere Länge eines Dampferzeugerrohres 10 zwischen einem Anfangspunkt AP und einem Endpunkt EP. Der Anfangspunkt AP ist festgelegt anhand der Unterkante U der Umfassungswand 4 zuzüglich eines Drittels der Höhe H des trichterförmigen Bodens 6. Der Endpunkt EP ist definiert durch diejenige Stelle, an der die Dampferzeugerrohre 10 in eine senkrechte Anordnung übergehen oder druckmäßig miteinander verbunden sind. In nicht näher dargestellter Art und Weise ist in einem oberen Bereich 21 des Befeuerungsbereichs V der Innendurchmesser der Dampferzeugerrohre 10 größer als in einem unteren Bereich 22 des Befeuerungsbereichs V.

## Patentansprüche

1. Durchlaufdampferzeuger mit einem aus miteinander über Flossen (13) gasdicht verschweißten Dampferzeugerrohren (10) gebildeten Gaszug (4), wobei die Dampferzeugerrohre (10) für den Durchfluß eines Strömungsmediums parallel geschaltet sind, auf ihrer Innenseite eine Oberflächenstruktur zum Erzeugen eines hohen Wärmeübergangs von ihrer Innenwand auf das Strömungsmedium aufweisen und in einem Befeuerungsbereich (V) des Gaszuges (4) annähernd in einer Spiralwicklung angeordnet sind, wobei jedes Dampferzeugerrohr (10) derart ausgelegt ist, daß durch Wertepaare der Rohrlänge (L) im Befeuerungsbereich (V) und des Rohraußendurchmessers (d) bestimmte Punkte in einem Koordinatensystem annähernd auf einer Geraden (A, B, C) liegen, die
- für eine Flossenbreite von 12 mm durch die durch die Wertepaare L = 59,7 m, d = 31,8 mm und L = 93,6 m, d = 44,5 mm bestimmten Punkte,
- für eine Flossenbreite von 16 mm durch die durch die Wertepaare L = 64,7 m, d = 31,8 mm und L = 99,8 m, d = 44,5 mm bestimmten Punkte, oder
- für eine Flossenbreite von 20 mm durch die durch die Wertepaare L = 70,6 m, d = 31,8 mm und L = 106,9 m, d = 44,5 mm bestimmten Punkte definiert ist.

2. Durchlaufdampferzeuger nach Anspruch 1,
**dadurch gekennzeichnet**, daß der Innendurchmesser der Dampferzeugerrohre (10) in einem oberen Bereich (21) des Befeuerungsbereichs (V) größer ist als in einem unteren Bereich (22).

## Claims

1. Once-through steam generator having a gas flue (4) formed from steam generator tubes (10) welded to one another in a gas-tight manner via fins (13), the steam generator tubes (10) being connected in parallel for the throughflow of a flow medium, having on their inside a surface structure for generating a high heat transfer from their inner wall to the flow medium and being arranged approximately in a spiral coil in a firing region (V) of the gas flue (4), each steam generator tube (10) being designed in such a way that points in a coordinate system which are determined by pairs of values of the tube length (L) in the firing region (V) and of the tube outside diameter (d) lie approximately on a straight line (A, B, C) which is defined
- for a fin width of 12 mm by the points determined by the pairs of values L = 59.7 m, d = 31.8 mm and L = 93.6 m, d = 44.5 mm,
- for a fin width of 16 mm by the points determined by the pairs of values L = 64.7 m, d = 31.8 mm and L = 99.8 m, d = 44.5 mm, or
- for a fin width of 20 mm by the points determined by the pairs of values L = 70.6 m, d = 31.8 mm and L = 106.9 m, d = 44.5 mm.

2. Once-through steam generator according to Claim 1, characterized in that the inside diameter of the steam generator tubes (10) is larger in an upper region (21) of the firing region (V) than in a lower region (22).

## Revendications

1. Générateur continu de vapeur, comportant un parcours (4) de gaz constitué de tubes (10) de générateur de vapeur mutuellement assemblés en étanchéité aux gaz par des entretoises (13), les tubes (10) de générateur de vapeur étant reliés en parallèle pour le passage d'un fluide circulant, comportant sur leur côté intérieur une structuration de surface destinée à produire une grande transmission de chaleur de leur paroi intérieure au fluide circulant et étant disposés, dans une zone (V) de chauffe du parcours (4) de gaz, approximativement en un enroulement en spirale,
chaque tube (10) de générateur de vapeur étant conçu de telle sorte que des points d'un système de coordonnées, déterminés par des paires de valeurs de la longueur (L) du tube dans la zone (V) de chauffe et du diamètre (d) extérieur du tube, se trouvent approximativement sur une droite (A, B, C), qui est définie :
- pour une largeur d'entretoise de 12 mm, par les points déterminés par les paires de valeurs L = 59,7 m, d = 31,8 mm et L = 93,6 m, d = 44,5 mm,
- pour une largeur d'entretoise de 16 mm, par les points déterminés par les paires de valeurs L = 64,7 m, d = 31,8 mm et L = 99,8 m, d = 44,5 mm, ou
- pour une largeur d'entretoise de 20 mm, par les points déterminés par les paires de valeurs L = 70,6 m, d = 31,8 mm et L = 106,9 m, d = 44,5 mm.

2. Générateur continu de vapeur suivant la revendication 1, caractérisé en ce que le diamètre intérieur des tubes (10) de générateur de vapeur est plus grand dans une région (21) supérieure que dans une région (22) inférieure de la zone (V) de chauffe.
